## Europäisches Patentamt
## European Patent Office
## Office européen des brevets

(19)

(11) Veröffentlichungsnummer : **0 153 489**
**B1**

(12)

# EUROPÄISCHE PATENTSCHRIFT

(45) Veröffentlichungstag der Patentschrift :
08.07.87

(51) Int. Cl.⁴ : **F 16 B 37/08**

(21) Anmeldenummer : **84116208.4**

(22) Anmeldetag : **22.12.84**

(54) **Mutterartiges Befestigungselement für Gewindebolzen.**

(30) Priorität : **25.02.84 DE 3406934**

(43) Veröffentlichungstag der Anmeldung :
**04.09.85 Patentblatt 85/36**

(45) Bekanntmachung des Hinweises auf die Patenterteilung : **08.07.87 Patentblatt 87/28**

(84) Benannte Vertragsstaaten :
**FR GB IT NL SE**

(56) Entgegenhaltungen :
**DE-A- 1 575 123**
**DE-A- 3 000 208**
**DE-U- 7 428 896**
**FR-A-   525 534**
**FR-A- 2 515 751**
**GB-A- 2 121 906**
**US-A- 2 723 584**

(73) Patentinhaber : **Firma A. Raymond**
**Teichstrasse 57**
**D-7850 Lörrach (DE)**

(72) Erfinder : **Jünemann, Dietrich**
**Scherrbrunnenweg 7**
**D-7850 Lörrach (DE)**
Erfinder : **Wolpensinger, Werner**
**Rebetsmatt 32**
**D-7888 Rheinfelden (DE)**

Jouve, 18, rue St-Denis, 75001 Paris, France

## Beschreibung

Die Erfindung bezieht sich auf ein mutterartiges Befestigungselement aus Kunststoff zum Aufdrücken auf einen Gewindebolzen, bestehend aus einem Halteteil und einem Befestigungsteil mit mehreren über den Umfang des Gewindebolzens gleichmäßig verteilten, an diesem eng anliegenden glatten Klemmwänden, die an koaxial zum Befestigungsteil ausgebildeten Wandbereichen des Halteteils elastisch nachgebend angeformt sind.

Ein Befestigungselement mit einem derartigen Klemmverbindungsprinzip ist in Form einer Schlagmutter bspw. aus der DE-PS 30 00 208 bekannt. Dieses Befestigungsprinzip kann aber auch zur Befestigung anderer Halteelemente wie beispielsweise Abdeckkappen, Rohrschellen, Kabelhalter oder Kabelbänder Verwendung finden, wobei das Befestigungsteil entweder am Halteteil angesetzt oder aber in dieses integriert sein kann.

Bei der bekannten Schlagmutter sind die Klemmwände jeweils an ihrem unteren Rand mit dem Innenrand des Mutterkopfes verbunden und zwar derart, daß sich die Klemmwände beim Einführen des Gewindebolzens an ihren freien (oberen) Enden federnd auseinanderbiegen. Dadurch läßt sich die bekannte Mutter leicht auf den Gewindebolzen aufschlagen und außerdem im Bedarfsfall noch etwas nachdrehen, wobei das Gewinde sich ein wenig in die glatten Klemmwände eingräbt. Der Vorteil dieser Befestigungsart liegt darin, daß sich das Halteelement schnell und einfach auf den auf einer Trägerplatte angeschweißten Gewindebolzen aufdrücken und im Bedarfsfall auch wieder losdrehen läßt.

Die einendige Anformung der Klemmwände am unteren Rand des Mutterkopfes hat nun zur Folge, daß der Kopf nur an diesem Ende radial zur Klemmwand und damit zum Gewindebolzen festgelegt ist, während das andere freie Ende des Kopfes in gewissen Grenzen um den Bolzen herum « taumeln » kann. Dies spielt zwar bei der besagten Schlagmutter keine Rolle, da diese mit dem Bodenflansch fest auf der Oberfläche des zu befestigenden Elements aufliegt. Soll dagegen ein anderes Halteelement mittels dieser Klemmverbindung auf dem Gewindebolzen befestigt werden, so wird diese Taumelbewegung in der Regel als störend empfunden werden, weil die zu haltenden Bauteile dadurch nicht fest genug gehalten werden.

Aufgabe der Erfindung ist es daher, die Verbindung zwischen den Klemmwänden und dem Halteteil so zu gestalten, daß einerseits das elastische Nachgeben der Klemmwände beim Aufdrücken auf den Gewindebolzen erhalten bleibt und andererseits die Verbindung zwischen dem Halteteil und den Klemmwänden möglichst stabil wird, so daß das Halteteil auf dem Gewindebolzen auch einen festen Halt findet.

Diese Aufgabe wird nach der vorliegenden Erfindung dadurch gelöst, daß die Klemmwände durch je zwei entlang ihrer achsparallelen Kanten nach außen abstehende Rippen mit den Wandbereichen des Halteteils verbunden sind.

Durch diese baulichen Maßnahmen werden die Klemmwände nunmehr auf ihrer ganzen Länge nach außen gleichmäßig abgestützt. Darüberhinaus können die Klemmwände aufgrund ihrer elastischen Deformierbarkeit und das Zusammenwirken mit den ebenfalls elastisch biegbaren Rippen so weit elastisch nach außen nachgeben, daß sich diese Klemmwände leicht über den Gewindebolzen aufdrücken lassen.

Die Rippen sind vorzugsweise so angeordnet, daß diejenigen von zwei benachbarten Klemmwandkanten parallel zueinander verlaufen. Dadurch übt der Gewindebolzen beim Eindringen in das Aufnahmeloch auf die jeweils benachbarten Rippen eine leichte Keilwirkung aus und biegt diese mehr oder weniger auseinander, wobei die glatten Klemmwände gleichzeitig etwas nach außen nachgeben. Diese Wirkung läßt sich noch weiter steigern, wenn die Klemmwände zwischen je zwei Rippen im Herstellungszustand ebenflächig geformt sind, so daß diese erst beim Aufdrücken auf den Gewindebolzen vom Außengewinde zu einem Bogen deformiert werden.

Nach einer weiteren Ausführungsform der Erfindung kann die « taumelfreie » elastische Abstützung der Klemmwände auf dem Gewindebolzen auch dadurch erreicht werden, daß die Klemmwände entlang ihrer achsparallelen Kanten elastisch untereinander verbunden sind und zwar durch die nach außen abstehenden Rippen und durch den Spalt zwischen den Klemmwänden überbrückende Außenwände zwischen den freien Rippenkanten, wobei das Befestigungsteil lediglich an einem Ende mit dem Halteteil verbunden ist.

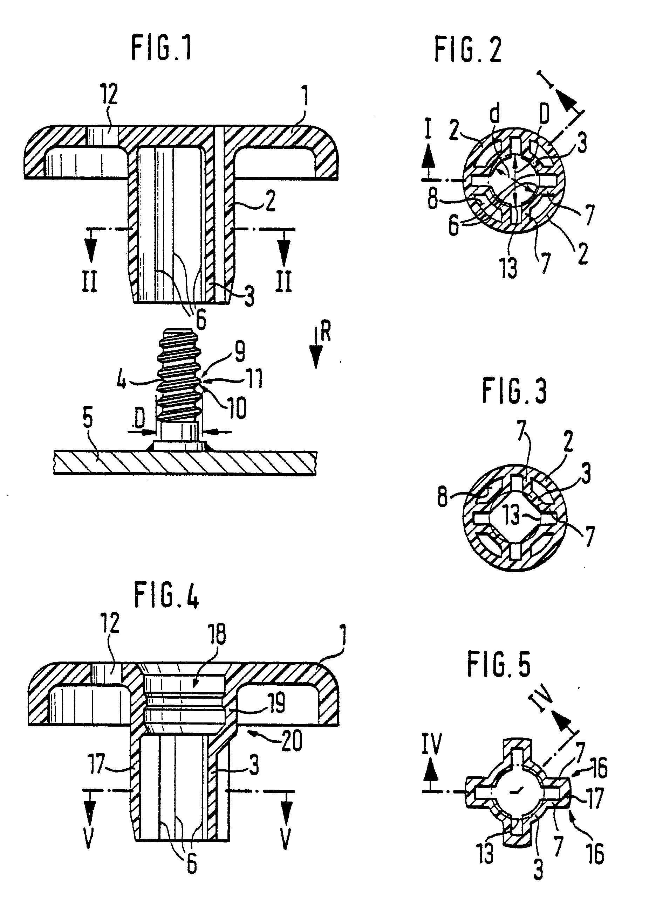

Durch die im Querschnitt U-förmige Verbindungsbrücke zwischen den Klemmwänden lassen sich diese noch weicher nach außen drücken als bei den Ausführungsformen mit einer geschlossenen Außenwand. Außerdem ergibt sich bei der Gießform durch Wegfall der bei Fig. 2 und 3 erforderlichen Ringspaltkerne noch ein entformungstechnischer Vorteil, der sich auf die Herstellungskosten günstig auswirkt.

In der Zeichnung sind verschiedene Ausführungsbeispiele der Erfindung dargestellt und sollen nachfolgend näher erläutert werden.

Es zeigt

Fig. 1 ein Befestigungselement im Schnitt durch die Kopfplatte und das Befestigungsteil gemäß Linie I — I in Fig. 2,

Fig. 2 einen Schnitt durch das Befestigungsteil gemäß Linie II — II in Fig. 1,

Fig. 3 den gleichen Schnitt durch das Befestigungsteil bei einer anderen Klemmwandausbildung,

Fig. 4 eine weitere Ausführungsform des Befestigungselements im Längsschnitt gemäß Linie IV — IV in Fig. 5 und

Fig. 5 einen Schnitt durch das Befestigungsteil gemäß Linie V — V in Fig. 4.

Das aus hartelastischem Kunststoff hergestellte Befestigungselement besteht im wesentlichen aus einem beispielsweise als runde Kopfplatte ausgebildeten Halteteil 1 und einer am Halteteil angeformten Befestigungshülse 2 mit über den Umfang gleichmäßig verteilten kreisbogenförmigen, glatten Klemmwänden 3, die sich beim Aufdrücken auf einen Gewindebolzen 4 eng an dessen Gewindekanten 11 anlegen. Der Gewindebolzen 4 kann auf einer Trägerplatte 5 angeschweißt oder sonstwie befestigt sein. Die Klemmwände 3 sind, wie aus Figur 2 ersichtlich, entlang ihrer achsparallelen Kanten 6 durch je zwei nach außen abstehende Rippen 7 mit der Innenwand 8 der Befestigungshülse 2 verbunden, wobei die Rippen 7 von je zwei benachbarten Klemmwandkanten 6 vorzugsweise parallel zueinander verlaufen.

Der Gewindebolzen 4 hat üblicherweise ein sägezahnförmiges Gewindeprofil, wobei die flache Gewindeflanke 9 in Aufdrückrichtung « R » und die steile Gewindeflanke 10 entgegen der Aufdrückrichtung am Gewindebolzen 4 vorgesehen ist. Durch die nur flache Neigung der Gewindeflanken 9 können die Klemmwände 3 beim Aufdrücken in Pfeilrichtung « R » leicht über die Gewindekanten 11 des Gewindebolzens 4 gleiten, dessen Außendurchmesser « D » etwas größer ist als der Innendurchmesser « d » der Klemmwände 3. Nach dem Aufdrücken des Befestigungsteils 2, 3, 7 graben sich dann die Gewindekanten 11 ein wenig in die Klemmwände 3 ein und geben so dem Befestigungselement in entgegengesetzter Richtung des Pfeiles « R » den gewünschten Halt. Will man das Befestigungselement später wieder lösen, so läßt sich die Kopfplatte 1, in der zum Eingreifen eines Hilfswerkzeugs zwei gegenüberliegende Löcher 12 vorgesehen sind, leicht losdrehen.

Das erfindungsgemäße Befestigungsteil erlaubt einerseits ein elastisches Ausweichen der Klemmwände 3 und damit eine leichte Montage und gewährleistet zum anderen einen « taumelfreien » festen Sitz auf dem Gewindebolzen 4. Nach dem Losdrehen ist das Befestigungsteil ohne weiteres wiederverwendbar.

In Fig. 3 ist eine weitere Möglichkeit zur elastischen Ausformung der Klemmwände 3 dargestellt, bei der die Klemmwände 3 zwischen je zwei Rippen 7 ebenflächig ausgebildet sind. Diese Klemmwände 3 können sich beim Aufdrücken auf den Gewindebolzen 4 leicht nach außen durchbiegen und dem strichpunktiert dargestellten Außendurchmesser 13 des Gewindebolzens 4 bogenförmig anpassen. Die parallelen Rippen 7 werden dabei gleichzeitig etwas auseinandergebogen, wobei jeweils zwei Rippen 7 mit der dazwischen liegenden Klemmwand 3 eine elastisch auffederbare Einheit bilden.

Fig. 4 zeigt ein anderes Befestigungselement mit einer ebenfalls runden Kopfplatte 1 und einer darunter angeformten Steckverbindungshülse 19 mit einem nach oben offenen Befestigungsloch 18, in das eine weitere Kopfplatte mittels eines entsprechenden Steckbolzens eingedrückt werden kann, um beispielsweise einen Teppich über einer Dämmatte am Boden eines Kraftfahrzeuges zu befestigen. Unterhalb der Steckverbindungshülse 19 befindet sich das Befestigungsteil mit den Klemmwänden 3 zur Aufnahme des Gewindebolzens 4. Wie aus dem Schnitt durch das Aufnahmeloch gemäß Fig. 5 ersichtlich, gibt es bei dieser Ausführungsform zwar auch entlang der achsparallelen Kanten 6 der Klemmwände 3 nach außen abstehende Rippen 7, doch fehlt hierbei die durchgehende Außenhülse 2. Statt dessen sind die Klemmwände 3 an den freien Rippenkanten 16 durch koaxial zur Klemmwand 3 verlaufende Verbindungswände 17 untereinander verbunden, so daß die Rippen 7 mit den Verbindungswänden 17 ein U-förmiges Profil bilden. Diese Ausführungsform ist noch elastischer als die vorgenannten Formen und auch in der Herstellung günstiger, weil durch den Wegfall der durchgehenden Außenhülse 2 die Kerne für die Ringspalte entfallen.

Es versteht sich, daß die Rippen 7 sowohl radial nach außen als auch, wie in Fig. 5 gezeigt, parallel zueinander verlaufen können. Ebenso ist es aber auch möglich, daß die Rippen 7 nach außen hin konisch bzw. spitzwinklig zusammenlaufen. Das gleiche gilt auch für die Ausführungsformen nach Fig. 2 und 3. In diesen Fällen wird die bereits erwähnte Keilwirkung des Gewindebolzens 4 auf die Rippen 7 noch verstärkt.

Des weiteren ist es denkbar, die Ausführungsformen nach Fig. 1, 2 und 4, 5 derart miteinander zu kombinieren, daß die Befestigungshülse im unteren Bereich nach Fig. 5 und im oberen Bereich nach Fig. 2 ausgebildet wird. Das hätte die Wirkung, daß die Befestigungshülse zwar in der zweiten Phase des Aufdrückens mit etwas größerer Kraft beaufschlagt werden müßte, daß dafür aber die Klemmwände 3 in diesem Bereich auch fester an den Gewindebolzen 4 angedrückt würden.

Allgemein wäre noch darauf hinzuweisen, daß die erfindungsgemäße Ausbildung der Befestigungshülse aus Herstellungsgründen immer dann besonders vorteilhaft ist, wenn das Halteteil genau wie die Befestigungshülse in Achsrichtung der Hülse entformt wird, so daß lediglich zwei Formhälften benötigt werden.

Im übrigen ist die Erfindung nicht nur in Verbindung mit Gewindebolzen verwendbar, sondern ganz allgemein in Verbindung mit Bolzen, welche radiale Vorsprünge oder Wülste aufweisen oder sonstwie besonders aufgerauht sind. Allerdings kommt diese Bolzenausbildung nur dann in Betracht, wenn auf die Möglichkeit verzichtet wird, die Befestigungselemente im Bedarfsfall wieder losdrehen zu können. In diesem Fall muß das Befestigungselement bei einer notwendig werdenden Demontage durch ein neues ersetzt werden, da die Klemmwände bei einer solchen Gewaltanwendung zwangsläufig unbrauchbar würden.

## Patentansprüche

1. Mutterartiges Befestigungselement aus Kunststoff zum Aufdrücken auf einen Gewindebolzen (4), bestehend aus einem Halteteil (1) und einem Befestigungsteil (2) mit mehreren über den Umfang des Gewindebolzens (4) gleichmäßig verteilten, an diesen eng anliegenden glatten Klemmwänden (3), die an koaxial zum Befestigungsteil (2) ausgebildeten Wandbereichen des Halteteils (1) elastisch nachgebend angeformt sind, dadurch gekennzeichnet, daß die Klemmwände (3) durch je zwei entlang ihrer achsparallelen Kanten (6) nach außen abstehende Rippen (7) mit den Wandbereichen (2, 17) des Halteteils (1) verbunden sind.

2. Befestigungselement nach Anspruch 1, dadurch gekennzeichnet, daß die Rippen (7) von je zwei benachbarten Klemmwandkanten (6) parallel zueinander verlaufen.

3. Befestigungselement nach Anspruch 1 oder 2, dadurch gekennzeichnet, daß die Klemmwände (3) ebenflächig ausgebildet sind, wobei der Durchmesser « d » des inneren Berührungskreises. etwas kleiner ist als der Außendurchmesser « D » des Gewindebolzens (4).

4. Befestigungselement nach Anspruch 1 oder 2, dadurch gekennzeichnet, daß die außenliegenden Rippenkanten (16) von zwei benachbarten Rippen (7) durch den Spalt zwischen den Klemmwänden (3) überbrückende Außenwände (17) untereinander verbunden sind, wobei das Befestigungsteil (3, 7, 17) lediglich an einem Ende (20) mit dem Halteteil (1) verbunden ist.

## Claims

1. A nut-like fixing element of plastics material for being pressed on to a screwthreaded pin (4) comprising a holding portion (1) and a fixing portion (2) having a plurality of smooth clamping walls (3) which are uniformly distributed over the periphery of the screwthreaded pin (4) and which bear closely thereagainst and which are elastically yieldingly formed on wall regions of the holding portion (1), which are disposed coaxially with respect to the fixing portion (2), characterised in that the clamping walls (3) are each connected to the wall regions (2, 17) of the holding portion (1) by two ribs (7) which project outwardly along their edges (6) which are parallel to the axis.

2. A fixing element according to claim 1 characterised in that the ribs (7) of each two adjacent clamping wall edges (6) extend in mutually parallel relationship.

3. A fixing element according to claim 1 or claim 2 characterised in that the clamping walls (3) are of a flat-surfaced configuration, wherein the diameter « d » of the inner circle touching same is somewhat smaller than the outside diameter « D » of the screwthreaded pin (4).

4. A fixing element according to claim 1 or claim 2 characterised in that the outward edges (16) of two adjacent ribs (7) are connected together by outer walls (17) which bridge across the gap between the clamping walls (3), wherein the fixing portion (3, 7, 17) is connected only at one end (20) to the holding portion (1).

## Revendications

1. Organe de fixation type écrou réalisé en matière plastique pour emmanchement par pression sur une tige filetée (4) comportant un élément de retenue (1) et un élément de fixation (2), en l'occurrence constituée de plusieurs segments de parois de serrages lisses (3) régulièrement répartis autour de la circonférence de la tige filetée (4), lesdits segments de parois de serrages étant reliés élastiquement à la paroi de l'élément de retenue (1) disposée coaxialement par rapport à l'élément de fixation, se caractérisant par le fait que les segments de parois de serrage (3) sont reliés aux éléments de paroi (2, 17) de l'élément de retenue, le long de leurs arêtes (6) paralèlles à l'axe chacune par deux nervures (7) orientées vers l'extérieur.

2. Organe de fixation suivant la revendication 1, se caractérisant par le fait que les nervures (7) de chaque fois deux arêtes de parois de serrages (6) voisines sont paralèlles les unes aux autres.

3. Organe de fixation suivant la revendication 1 ou 2, se caractérisant par le fait que les segments de parois de serrages (3) ont une surface intérieure platte et sont tangentielles à un cercle dont le diamètre « d » est légèrement plus petit que le diamètre « D » de la tige filetée (4).

4. Organe de fixation suivant la revendication 1 ou 2, se caractérisant par le fait que les bords des arêtes extérieures (16) des deux nervures (7) voisines sont reliés par des parois de liaison (17) à travers la fente située entre les segments de parois de serrages (3) et que l'élément de fixation (3, 7, 17) est relié à une de ses extrémités (20) à l'élément de retenue (1).

FIG.1

FIG.2

FIG.3

FIG.4

FIG.5